# EUROPÄISCHE PATENTSCHRIFT

(11) **EP 0 535 412 B1**
(45) Veröffentlichungstag und Bekanntmachung des Hinweises auf die Patenterteilung: **21.06.1995**
(21) Anmeldenummer: 92115378.9
(22) Anmeldetag: 09.09.1992
(51) Int. Cl.: H02K 3/51, H02K 9/00

(54) **Stromzuführungsbolzen im Rotor einer elektrischen Maschine**
Current-supply bolt in the rotor of an electric machine
Boulon d'amenée de courant dans le rotor d'une machine électrique

(30) Priorität: 01.10.1991 CH 2902/91
(43) Veröffentlichungstag der Anmeldung: 07.04.1993
(73) Patentinhaber: ASEA BROWN BOVERI AG, 5400 Baden (CH)
(72) Erfinder: Schöllhorn, Karl, Dr., CH-5242 Birr (CH)

(56) Entgegenhaltungen:
- GB-A- 775 109
- US-A- 3 457 440

## Beschreibung

### TECHNISCHES GEBIET

Die Erfindung bezieht sich auf einen Stromzuführungsbolzen im Rotor einer elektrischen Maschine, insbesondere Turbogenerator, zur Verbindung der zentral im Rotor axial verlaufenden Erregerzuleitung mit den Erregerwicklungsleitern im Wickelkopf des Rotors, welcher Bolzen aus Stahl gefertigt ist und aus einem Schaft und Gewinden an beiden Bolzenenden besteht.

Die Erfindung nimmt dabei Bezug auf einen Stand der Technik, wie er sich beispielsweise aus der CH-PS 586 966 ergibt.

### TECHNOLOGISCHER HINTERGRUND UND STAND DER TECHNIK

Bei Turbogeneratoren erfolgt die Führung der Erregerleitungen am Rotor zur Rotorwicklung im allgemeinen in einer zentralen Wellenbohrung. Die Leiter in der Wellenbohrung sind meist massiv und rundum isoliert. Von diesen zentral geführten Massivleitern wird die Verbindung zur Rotorwicklung über radial in die Massivleiter eingeschraubte Stromzuführungsbolzen hergestellt. Ein solcher Bolzen ist beispielsweise Gegenstand der CH-Patentschrift 586 966. Neben Bolzen aus Kupfer oder einer Kupferlegierung werden bei neuern Konstruktionen Bolzen aus hochfestem Stahl verwendet, welche dann forciert gekühlt werden müssen. Allen Ausführungen gemeinsam ist, dass neben der Schraubverbindung mit den Massivleitern in der Wellenbohrung mindestens eine zweite Verschraubung des Bolzens in der radialen Wellenbohrung als unumgänglich angesehen wurde, um den auf den Bolzen einwirkenden Fliehkräften zu begegnen.

Diese zweite Verschraubung liegt nun in einem Wellenabschnitt, der infolge der Wellendurchbiegung durch das Eigengewicht des Rotors und Unwuchtkräfte extrem hoch beansprucht ist. Im ungünstigsten Fall könnnen sich im Bereich des Gewindes in der radialen Wellenbohrung Risse ausbilden, welche zur Havarie führen können.

### KURZE DARSTELLUNG DER ERFINDUNG

Der Erfindung liegt die Aufgabe zugrunde, einen Stromzuführungsbolzen zu schaffen, der zu keiner Gefährdung der Welle führt und auch optimal gekühlt werden kann.

Diese Aufgabe wird erfindungsgemäss dadurch gelöst, dass der Schaft in Bolzenlängsrichtung geschlitzt ist, dass mindestens drei Schlitze vorgesehen sind, die sich radial bis zur Bolzenmitte erstrecken.

Der Vorteil der Erfindung ist insbesondere darin zu sehen, dass der Bolzen ohne nennenswerte Einbusse an Festigkeit in Längsrichtung quer zur Bolzenlängsrichtung elastisch ist. Die Schlitzung in Längsrichtung ermöglicht zudem eine optimale Kühlung. Der erfindungsgemässe Bolzen ist auch gegenüber bekannten Ausführungen leichter, so dass sich eine zusätzliche Halterung durch eine Verschraubung etc. erübrigt.
Die Kühlung kann noch gesteigert werden, wenn gemäss einer ersten Weiterbildung der Bolzen mit einer den gesamten Bolzen durchsetzenden Durchgangsbohrung versehen ist.

Vorteilhaft ist es ferner, den Schaft konisch auszubilden, wobei das dickere Ende am innenliegenden Bolzende ist. Dies vermindert die Fliehkraftbelastung.

Eine weitere Steigerung der Kühlung kann erreicht werden, wenn über den Bolzen ein dünnwandiger Hohlzylinder geschoben ist, der sich durch einen nach innen ragenden Vorsprung an einem Bund am Bolzen in der Höhe des Uebergangs vom Gewinde zum Schaft abstützt und gezielt Kühlgas durch den Raum zwischen Bolzenschaft und diesem Zylinder geleitet wird. In Verbindung mit den bis unter den besagten Bund reichenden Schlitzen lässt sich die Kühlung so vervollkommnen, dass der Bolzen allen Betriebsbeanspruchungen in elektrischer und mechanischer Hinsicht standhält.

Ausführungsbeispiele der Erfindung sowie die damit erzielbaren Vorteile werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig.1: ein Ausführungsbeispiel eines in die Maschine eingebauten Stromzuleitungsbolzens gemäss der Erfindung im Längsschnitt;
- Fig.2: einen Schnitt durch den Stromzuleitungsbolzen gemäss Fig.1 längs deren Linie AA;

### WEGE ZUR AUSFÜHRUNG DER ERFINDUNG

Ein gesamthaft mit der Bezugsziffer 1 bezeichneter Stromzuführungsbolzen aus Stahl weist einen konischen Schaft 2 und Gewinde 3,4 an beiden Enden auf. Am inneren Ende ist der Bolzen 1 in Massivleiter 5,6 mit Halbkreisquerschnitt eingeschraubt, die axial in einer zentralen Wellenbohrung 7 des Rotorkörpers 8 verlaufen. Zur gegenseitigen Isolierung ist zwischen den beiden Flachseiten der Massivleiter 5,6 eine Isolierzwischenlage 9 aus glasfaserverstärktem Kunststoff vorgesehen. Die zentrale Wellenbohrung 7 ist mit einem Isolierrohr 10 ausgekleidet, das im Bereich der Bolzen 1 Durchbrüche aufweist. Zwischen dem Isolierrohr 10 und den Massivleitern 5,6 ist ein Ringraum 11 vorgesehen, durch den Kühlgas strömen kann.

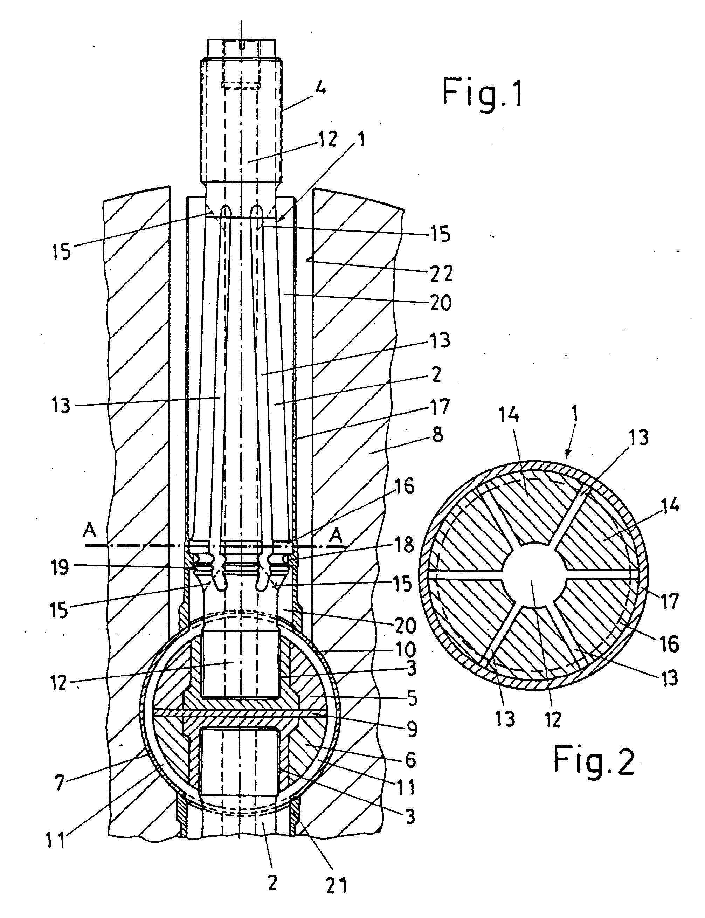

Wie aus dem in Fig.2 dargestellten Bolzenquerschnitt erkennbar ist, ist der Bolzenschaft mit einer Durchgangsbohrung 12 in Bolzenlängsrichtung versehen. Zudem ist der Bolzenschaft 2 in Bolzenlängsrichtung mit im Beispielsfall sechs Schlitzen 13 versehen, zwischen denen Sektoren 14 erkennbar sind. Unter einem Schlitz wird in diesem Zusammenhang eine sich im wesentlichen in Bolzenlängsrichtung erstreckende Materialausnehmung verstanden, die sich im Grenzfall bis zur Bolzenlängsachse erstreckt. Die Schlitze 13 reichen in Bolzenlängsrichtung bis nahe an die Gewinde 3,4 heran und laufen dort aus (punktierte Linien in 15 in Fig.1). Die radiale Erstreckung der Schlitze 13 ist so zu bemessen, dass diese die Durchgangsbohrung 12 anschneiden. Es kann auch eine von sechs abweichende Anzahl Schlitzen 13 eingebracht sein, wobei drei als untere Grenze zu sehen ist, während die obere Grenze durch die verbleibende Restfestigkeit bestimmt ist.

Am Uebergang vom Schaft 2 zum (inneren) Gewinde 3 ist am Bolzenschaft ein Bund 16 ausgebildet. Vor dem Einschrauben des Bolzens 1 ist (vom innenliegenden Ende her) ein dünnwandiger Hohlzylinder 17 über den Bolzen 1 geschoben. Dieser weist nahe seinem inneren Ende einen nach innen gerichteten ringförmigen Vorsprung 18 auf, mit dem sich der Hohlzylinder 17 an dem genannten Bund 16 abstützt. Ein Sicherungsring 19 dient dem Zusammenhalt von Bolzen 1 und Hohlzylinder 17. Wie aus Fig.1 deutlich hervorgeht, reichen die Schlitze 13 bis hinter den Bund 16, ehe sie im Bolzenabschnitt zwischen dem Bund 16 und dem inneren Gewinde 3 auslaufen. Auf diese Weise steht der Ringraum 11 zwischen Massivleitern 5,6 und dem Isolierrohr 10 über den Durchbruch im Isolierrohr 10 mit dem Ringraum 20 zwischen dem radial aussenliegenden Schaftabschnitt und dem Hohlzylinder 17 in freier Verbindung. Vom Maschinenlüfter gefördertes Kühlgas kann ohne nennenswerte Beeinträchtigung vom Ringraum 11 in der Wellenbohrung 7 durch die Schlitze 13 im Bolzenschaft und schliesslich den Ringraum 20 strömen, ehe es den Rotor wieder verlässt.

Damit möglichst wenig Kühlgas ausserhalb des Hohlzylinders 17 zwischen diesem und der Wandung der radialen Wellenbohrung 22 strömt, ist das untere Ende des Hohlzylinders 21 verdickt und der Form des Isolierrohres 10 angepasst. Zudem ist die Lage des ringförmigen Vorsprunges 18 so bemessen, dass das untere Ende 21 des Hohlzylinder 17 im eingebauten Zustand auf dem Isolierrohr 10 aufliegt.

Neben der gezielten Führung des Kühlgases im und am Bolzen haben die Schlitze 13 eine zweite wesentliche Funktion: Ohne bedeutsame Verkleinerung der Festigkeit des Bolzens in seiner Längsrichtung ist der erfindungsgemässe Stromzuführungsbolzen wesentlich elastischer in Querrichtung. Damit wird eine Entkopplung zwischen der Einspannstelle des Bolzens an den Massivleiter 5,6 in der Wellenbohrung 7 einerseits und dem Anschluss am Rotorwickelkopf erzielt, welche die Betriebssicherheit der Maschine wesentlich steigert.

## Patentansprüche

1. Stromzuführungsbolzen im Rotor einer elektrischen Maschine, insbesondere Turbogenerator, zur Verbindung der zentral im Rotor axial verlaufenden Erregerzuleitung (5,6) mit den Erregerwicklungsleitern im Wickelkopf des Rotors, welcher Bolzen aus Stahl gefertigt ist und aus einem Schaft (2) und Gewinden (3,4) an beiden Bolzenenden besteht, dadurch gekennzeichnet, dass der Schaft (2) in Bolzenlängsrichtung geschlitzt ist und dass mindestens drei Schlitze (13) vorgesehen sind, die sich radial bis zur Bolzenachse erstrecken

2. Stromzuführungsbolzen nach Anspruch 1, dadurch gekennzeichnet, dass der Bolzen (1) mit einer den gesamten Bolzen durchsetzenden Durchgangsbohrung (12) versehen ist.

3. Stromzuführungsbolzen nach Anspruch 1 oder 2, dadurch gekennzeichnet, dass der Schaft (2) konisch ausgebildet ist, wobei das dickere Ende am innenliegenden Bolzende liegt.

4. Stromzuführungsbolzen nach einem der Ansprüche 1 bis 3, dadurch gekennzeichnet, dass über den Bolzen (1) ein dünnwandiger Hohlzylinder (17) geschoben ist, der sich durch einen nach innen ragenden Vorsprung (18) an einem Bund (16) am Bolzen in der Höhe des Uebergangs vom Gewinde (3) zum Schaft (2) abstützt.

5. Stromzuführungsbolzen nach Anspruch 4, dadurch gekennzeichnet, dass die Schlitze (13) im Bolzen den besagten Bund (16) durchsetzen.

## Claims

1. Terminal stud in the rotor of an electric machine, in particular a turbo-generator, for connecting the exciter supply lead (5, 6), which extends axially in the centre of the rotor, to the exciter winding conductors in the winding overhang of the rotor, which stud is produced from steel and consists of a shank (2) and threads (3, 4) on both stud ends, characterized in that the shank (2) is slotted in the longitudinal direction of the stud and in that at least three slots (13) are provided which extend radially up to the stud axis.

2. Terminal stud according to Claim 1, characterized in that the stud (1) is provided with a through bore-hole (12) penetrating the entire stud.

3. Terminal stud according to Claim 1 or 2, characterized in that the shank (2) is constructed conically, the thicker end being at the internal stud end.

4. Terminal stud as claimed in one of claims 1 to 3, characterized in that there is pushed over the stud (1) a thin-walled hollow cylinder (17) which is supported by an inwardly projecting projection (18) on a collar (16) on the stud at the level of the transition from the thread (3) to the shank (2).

5. Terminal stud according to Claim 4, characterized in that the slots (13) in the stud penetrate said collar (16).

## Revendications

1. Boulon d'amenée de courant dans le rotor d'une machine électrique, en particulier un turbogénérateur, pour relier le conducteur d'amenée d'excitation (5, 6), orienté axialement en position centrale dans le rotor, aux conducteurs de l'enroulement d'excitation dans la tête de bobine du rotor, boulon qui est fabriqué en acier et se compose d'une tige (2) et de filets (3, 4) aux deux extrémités du boulon, caractérisé en ce que la tige (2) est fendue dans le direction longitudinale du boulon et en ce qu'il est prévu au moins trois fentes (13), qui s'étendent radialement jusqu'à l'axe du boulon.

2. Boulon d'amenée de courant suivant la revendication 1, caractérisé en ce que le boulon (1) est pourvu d'un alésage de passage (12) traversant tout le boulon.

3. Boulon d'amenée de courant suivant la revendication 1 ou 2, caractérisé en ce que la tige (2) est de forme conique, l'extrémité plus épaisse étant l'extrémité interne du boulon.

4. Boulon d'amenée de courant suivant l'une des revendications 1 à 3, caractérisé en ce que l'on enfile sur le boulon (1) un cylindre creux (17) à paroi mince, qui prend appui par une saillie interne (18) sur un rebord (16) formé sur le boulon à hauteur de la transition entre le filet (3) et la tige (2).

5. Boulon d'amenée de courant suivant la revendication 4, caractérisé en ce que les fentes (13) dans le boulon traversent ledit rebord (16).
